# EUROPÄISCHE PATENTSCHRIFT

(11) **EP 1 275 574 B1**
(45) Veröffentlichungstag und Bekanntmachung des Hinweises auf die Patenterteilung: **04.08.2004**
(21) Anmeldenummer: 02013667.7
(22) Anmeldetag: 20.06.2002
(51) Int. Cl.: B62D 9/00, B62D 7/10

(54) **Lenkbare Fahrzeugachse für ein Nutzfahrzeug**
Steerable vehicle axle for an industrial vehicle
Essieu directeur de véhicule pour un véhicule industriel

(30) Priorität: 12.07.2001 DE 10133937
(43) Veröffentlichungstag der Anmeldung: 15.01.2003
(73) Patentinhaber: MAN Nutzfahrzeuge Aktiengesellschaft, 80976 München (DE)
(72) Erfinder: Schaller, Karl Viktor, Dr.-Ing., 82194 Gröbenzell (DE); Rühmann, Gerd, 82229 Seefeld-Hechendorf (DE); Sigl, Johann, 82266 Inning (DE)

(56) Entgegenhaltungen:
- DE-A- 19 809 279
- DE-A- 19 919 845
- DE-C- 19 637 997

## Beschreibung

Die Erfindung betrifft eine lenkbare Fahrzeugachse für ein Nutzfahrzeug nach dem Oberbegriff des Patentanspruches 1, wie sie auch in DE-19637997 gefunden werden kann.

Bei einer derartigen beispielsweise aus der DE 199 19 845 A1 bekannten Fahrzeugachse ist ein Lenker-geführter Achskörper vorgesehen, an dessen beiden Enden um zugeordnete Lenkachsen schwenkbar gelagerte Radträger vorgesehen sind. Über eine Lenkeinrichtung, welche in herkömmlicher Weise ein Lenkgetriebe aufweist, werden die Lenkkräfte auf die Radträger über eine Lenkstange und eine Spurstange übertragen. In herkömmlicher Weise ist das Lenkgetriebe am Fahrzeugaufbau befestigt. Beim Einfedern der Achse können insbesondere bei langen Federwegen erhebliche Relativbewegungen zwischen der Lenkeinrichtung, insbesondere dem Lenkgetriebe und den Radträgern, auf welche die Lenkbewegungen übertragen werden, sich ergeben.

Aufgabe der Erfindung ist es daher, Relativbewegungen zwischen Bestandteilen der Achse, insbesondere der Radträger und der Lenkeinrichtung zu minimieren.

Diese Aufgabe wird bei der eingangs genannten lenkbaren Fahrzeugachse erfindungsgemäß durch die kennzeichnenden Merkmale des Patentanspruches 1 gelöst.

Bei der Erfindung ist die Lenkeinrichtung, mit welcher die Lenkkräfte auf die Radträger übertragen werden, an wenigstens einem Längslenker befestigt. Weit auskragende Lenkungslagerböcke, wie sie bei bekannten Lenksystemen verwendet werden, um die Lenkkräfte in den Rahmen einzuleiten, sind nicht mehr erforderlich. Hierdurch erreicht man eine Verbesserung der Lenkpräzision, da Elastizitäten in den die Lenkkräfte auf die Radträger übertragenden Bauteilen deutlich verringert werden. Die Lenkstange des Lenksystems und der Längslenker müssen nicht mehr miteinander korrespondieren. Das Lenkgetriebe kann an einer konstruktiv günstigen Position am Längslenker platziert werden, so dass die vom Längslenker aufzunehmenden Abstützmomente der Lenkstange minimiert werden. Beim Einfedern der Achse ergeben sich an den Bauteilen der Lenkeinrichtung und insbesondere des Lenkgetriebes nur geringfügige Schwenkbewegungen. Ferner ermöglicht die Erfindung eine große Freiheit bei der Gestaltung des vorderen Lenkerlagers des Lenkgestänges. Da im Gegensatz zu herkömmlichen Lenksystemen nur geringe Elastizitäten im vorderen Lenkerlager vorhanden sind, lassen sich Komfortprobleme durch Wahl optimaler Federsteifigkeiten im Lenkerlager vermeiden und die Maßnahme führt zu besserem Fahrverhalten. Die erfindungsgemäße lenkbare Fahrzeugachse kann als Universal-Nutzfahrzeugachse verwendet werden. Ferner kann ein gerader oder gekröpfter Achskörper verwendet werden.

Vorzugsweise findet die Erfindung Verwendung bei einer als selbststabilisierende Verbundlenkerachse ausgebildeten Fahrzeugachse, wie sie aus der DE 198 09 279 A1 bekannt ist. Hierbei kann durch Feder-Dämpfer-Beine eine platzsparende Federung und Dämpfung der Starrachse erreicht werden. Bei dieser bekannten Federung oder bei einer herkömmlichen Luftfederung oder Schraubenfederung erfolgt die Querführung durch einen Panhardstab. Ferner kann in bekannter Weise eine Blattfederung vorgesehen sein, welche die Querführung des Achskörpers vermittelt, wobei Längslenker die Längsführung übernehmen.

Dabei muss die Position der Blattfedern nicht verändert werden. Diese können parallel zu den Längslenkern mit der herkömmlichen Federspur angeordnet werden. Da die Blattfedern keine Längsführungsfunktion mehr haben, können diese einfach ausgestaltet sein, wobei an den Enden keine Federaugen mehr erforderlich sind. Die Abstützung der Achslast kann über Abwälzböcke mit seitlichem Abschluss zur Übertragung der Querabstützung erfolgen. Eine kinematisch nachteilige S-Schlag-Verformung der Blattfeder ergibt sich nicht.

Anstelle eines Lenkgetriebes kann die Lenkeinrichtung, welche die Lenkkräfte überträgt, auch einen elektrischen oder hydraulischen Stellzylinder in Form einer Kolben-/Zylindereinheit für ein "steer by wire"-System aufweisen. Die Kolben-/Zylindereinheit, insbesondere der Zylinder kann vorzugsweise mittels eines Kugelgelenkes direkt auf dem Längslenker befestigt sein. Dieser Stellzylinder stellt somit eine längsbewegliche Lenkstange dar. Der Stellzylinder kann an einer Seite am Längslenker befestigt sein. Es ist jedoch auch möglich, beidseitig zur Fahrzeuglängsmittelebene an den Längslenkem Stellzylinder zu befestigen. Die Befestigungsstelle sowohl des Lenkgetriebes als auch des Stellzylinders ist vorzugsweise an dem Ende des Längslenkers, welches mit dem Fahrzeugaufbau, insbesondere einem Längsträger des Fahrzeugaufbaus verbunden ist.

Es zeigt
- Fig. 1: in perspektivischer Darstellung eine vormontierte Baueinheit einer lenkbaren Fahrzeugachse, in welche die die Lenkkräfte übertragende Lenkeinrichtung integriert ist;
- Fig. 2: in perspektivischer Darstellung die in der Fig. 1 dargestellte vormontierte Baueinheit, welche noch durch das als Blattfederung ausgebildete Federsystem ergänzt ist;
- Fig. 3: die in der Fig. 1 dargestellte vormontierte Baueinheit in perspektivischer Darstellung von der anderen Fahrzeugseite her gesehen;
- Fig. 4: in perspektivischer Darstellung die in Fig. 3 dargestellte vormontierte Baueinheit mit der Blattfederung, welche an einem Längsträger des Fahrzeugaufbaus befestigt ist; und
- Fig. 5: in perspektivischer Darstellung in einer Ansicht wie in Fig. 1 ein als vormontierte Baueinheit ausgebildetes Ausführungsbeispiel mit einem z. B. hydraulischen Stellzylinder zur Übertragung der Lenkkräfte.

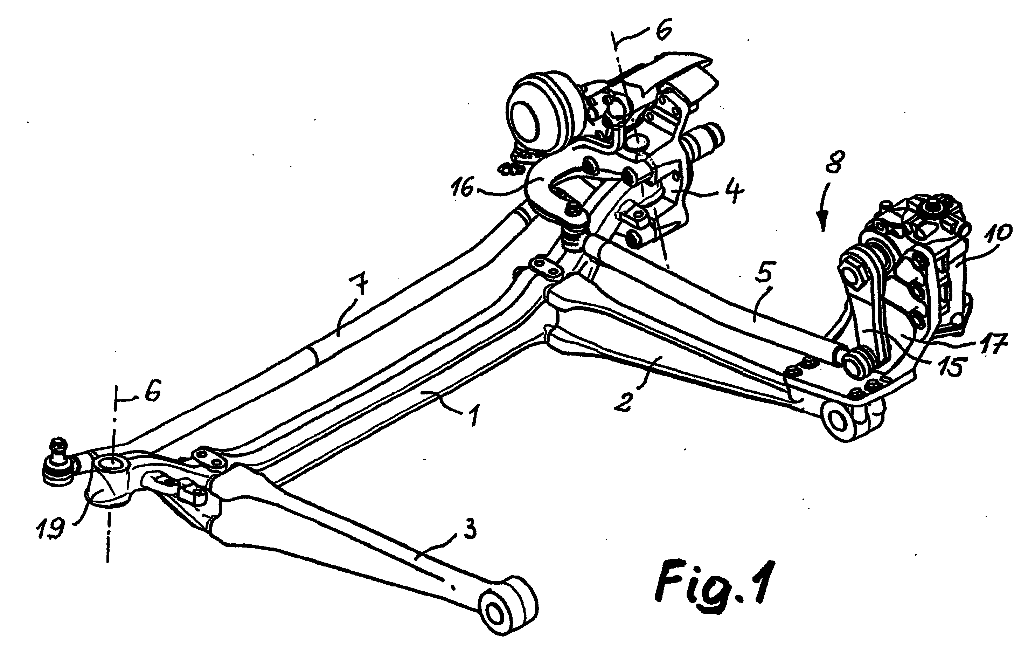

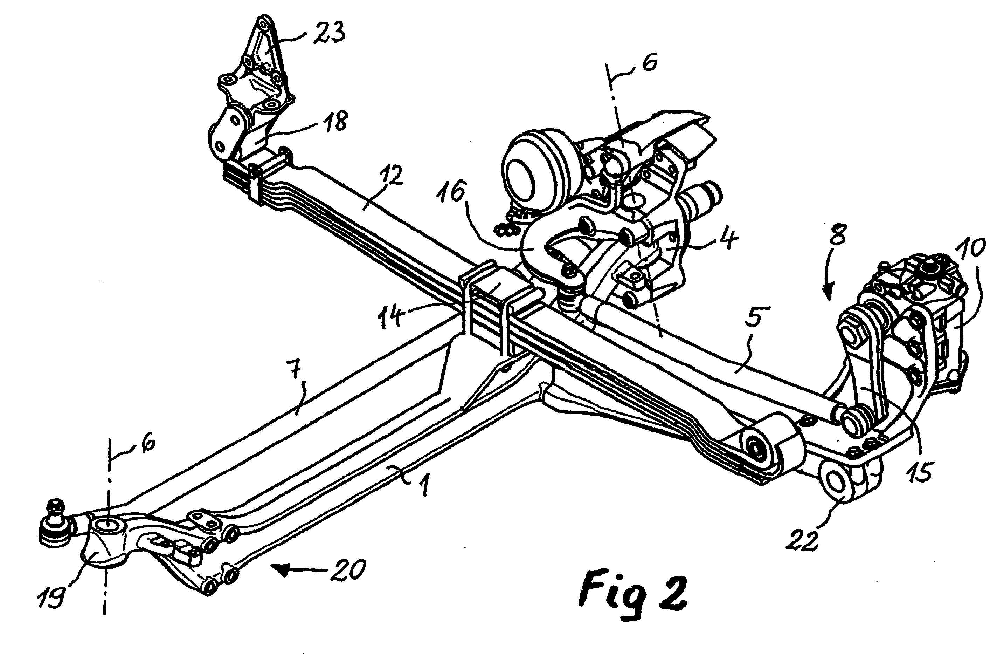

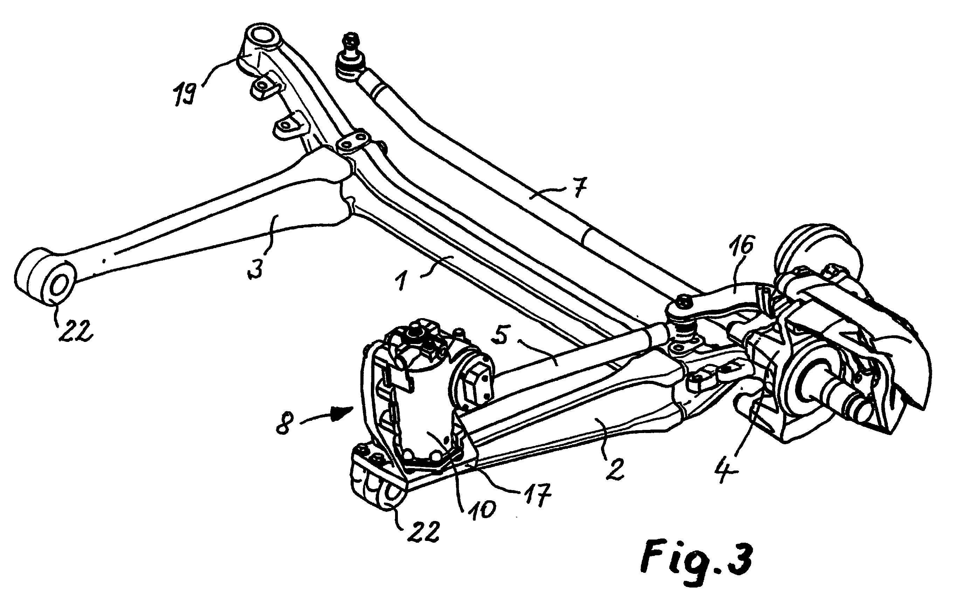

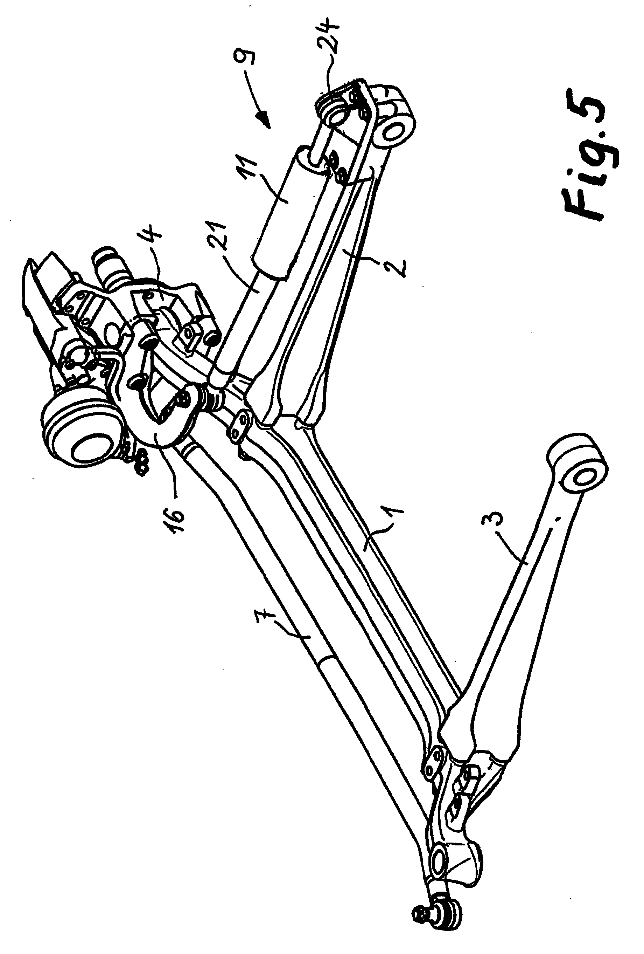

In den Figuren sind Ausführungsbeispiele der lenkbaren Fahrzeugachse für ein Nutzfahrzeug insbesondere schweres Nutzfahrzeug dargestellt. Die dargestellten Ausführungsbeispiele sind Fahrzeugachsen, in die das Lenksystem und insbesondere eine die Lenkkräfte übertragende Lenkeinrichtung 8 (Fig. 1 bis 4) bzw. Lenkeinrichtung 9 (Fig. 5) integriert ist. Wie aus den Fig. 1 und 3 zu ersehen ist, kann die Fahrzeugachse mit dem integrierten Lenksystem als vormontierte Baueinheit ausgebildet sein, wobei in diese vormontierte Baueinheit auch ein als Blattfederung ausgebildetes Federsystem zusätzlich integriert sein kann, wie das Ausführungsbeispiel der Fig. 2 zeigt.

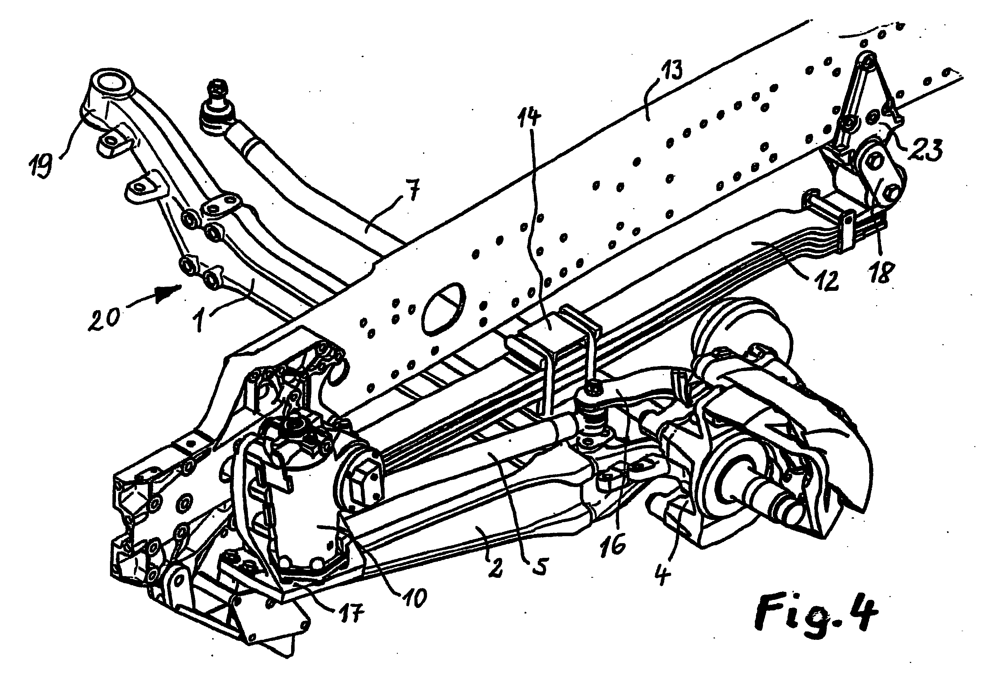

Die dargestellten Fahrzeugachsen sind als Starrachsen ausgebildet und besitzen einen quer zur Fahrzeuglängsrichtung angeordneten Achskörper 1. Der Achskörper 1 ist in Fahrzeuglängsrichtung mittels Längslenker 2, 3, welche beidseitig der Fahrzeuglängsmittelebene angeordnet sind, mit dem Fahrzeugaufbau, insbesondere Längsträgern 13 (Fig. 4) verbunden. Der in den Ausführungsbeispielen dargestellte Achskörper 1 ist ein an seinen beiden Enden hochgekröpfter Achskörper. Der Achskörper 1 kann jedoch auch als gerader Achskörper ausgebildet sein. Die Längslenker 2, 3 sind an den Enden des geraden Mittelbereiches des Achskörpers 1 in Befestigungsstellen 20 mit dem Achskörper 1 verbunden. Bei den dargestellten Ausführungsbeispielen sind vier Befestigungsstellen vorgesehen, in welchen durch Schraubverbindungen die Längslenker 2 am Achskörper 1 befestigt sind. An ihren vorderen Enden besitzen die Längslenker 2, 3 Lageraugen 22, in welchen die Längslenker 2, 3 mit dem Fahrzeugaufbau, insbesondere sich beidseitig der Fahrzeuglängsmittelebene erstreckenden Längsträgern 13, von denen ein Längsträger in der Fig. 4 dargestellt ist, verbunden sind.

An den beiden Enden des Achskörpers 1 befinden sich Anschlussköpfe 19 für Radträger 4. Die Radträger 4 sind in bekannter Weise um Lenkachsen 6 in den Anschlussköpfen 19 schwenkbar gelagert. Auf die Radträger 4 werden die Lenkkräfte über eine Lenkeinrichtung 8 (Fig. 1 bis 4) bzw. Lenkeinrichtung 9 (Fig. 5) übertragen.

In den Fig. 1 bis 4 besitzt die Lenkeinrichtung 8 ein Lenkgetriebe 10, welches an dem Längslenker 2 befestigt ist. Die Befestigungsstelle liegt im Bereich des Lenkerendes, welches im Lagerauge 22 mit dem Fahrzeugaufbau, insbesondere Längsträger 13 (Fig. 4) verbunden ist. Das Lenkgetriebe 10 ist mittels einer Halteeinrichtung 17, welche als abgewinkeltes Lagerschild ausgebildet ist, in mehreren Schraubverbindungen am Längslenker 2 befestigt. Das Lenkgetriebe 10 ist in bekannter Weise ausgebildet und überträgt Lenkbewegungen eines nicht näher dargestellten Lenkrades, wobei im Lenkgetriebe gegebenenfalls eine Lenkkraftverstärkung erfolgt.

An der Abtriebsseite des Lenkgetriebes befindet sich ein Lenkhebel 15, dessen Schwenkbewegung über eine Lenkstange 5 auf einen am Radträger 4 befestigten Lenkhebel 16 übertragen wird. Die Lenkbewegungen des an der einen Fahrzeugseite befindlichen Radträgers 4 werden über eine Spurstange 7 auf den an der anderen Fahrzeugseite befindlichen nicht näher dargestellten Radträger übertragen. Da das Lenkgetriebe 10 mit der Halteeinrichtung 17 am Längslenker 2 befestigt ist, entstehen beim Einfedern der Achse nur geringfügige Schwenkbewegungen des Lenkgetriebes 10 bzw. Relativbewegungen zwischen den Bauteilen der Achse und den Bauteilen des Lenksystems. Beim Einfedern der Achse müssen daher Lenkstange und Achslenker nicht mehr miteinander korrespondieren, wie das bei herkömmlichen Achsen und Lenksystemen der Fall ist. sen daher Lenkstange und Achslenker nicht mehr miteinander korrespondieren, wie das bei herkömmlichen Achsen und Lenksystemen der Fall ist.

Bei dem Ausführungsbeispiel der Fig. 2 ist in der vormontierten Baueinheit ferner eine Blattfederung mit parallel zu den Längslenkern 2, 3 angeordneten Blattfedern zu beiden Seiten der Längsmittelebene des Fahrzeugs vorgesehen. In der Fig. 2 ist eine der Blattfedern 12 dargestellt. Diese erstreckt sich parallel zum Längslenker 2. Die Blattfedermitte ist mit Hilfe bekannter Einspannmittel 14 in einer bestimmten Einspannlänge fest mit dem Achskörper 1 verbunden. An den Enden ist die Blattfeder 12 über Ausgleichslager 18 mit einer Querabstützung 23 am Fahrzeugaufbau, insbesondere an den zu beiden Seiten der Längsmittelebene des Fahrzeugs angeordneten Längsträgern 13 befestigt (Fig. 4) Zur Abstützung der Achslast genügt es, wenn die Federenden mit seitlichem Abschluss zur Übertragung der Querabstützung über Abwälzböcke mit den Längsträgern 13 verbunden sind.

Bei dem in der Fig. 5 dargestellten Ausführungsbeispiel beinhaltet die Lenkeinrichtung 9 einen elektrischen oder hydraulischen Stellzylinder 11. Der Stellzylinder 11 ist vorzugsweise über ein Kugelgelenk 24 im Bereich des vorderen Lenkerendes des Längslenkers 2 befestigt. Der Stellzylinder 11 ist anderenendes über eine Kolbenstange 21 mit dem Lenkhebel 16, der mit dem Radträger 4 fest verbunden ist, zur Übertragung der Lenkbewegung verbunden. Der Stellzylinder 11 und die Kolbenstange 21 bilden eine längsbewegliche Lenkstange der Lenkeinrichtung 9. Die vom nicht näher dargestellten Lenkrad ausgehenden Lenkbewegungen bzw. Lenkkräfte werden in Betätigungssignale für ein nicht näher dargestelltes Steuerventilsystem gewandelt (steer by wire), welches den Kolben des Stellzylinders 11 und die starr damit verbundene Kolbenstange 21 entsprechend bewegt. Beim Ausführungsbeispiel der Fig. 5 ist an einer Fahrzeugseite die Lenkeinrichtung 9 fest mit dem Längslenker 2 verbunden, wobei die Lenkbewegung des Radträgers 4 an der gleichen Fahrzeugseite über die Spurstange 7 auf den nicht näher dargestellten Radträger der anderen Fahrzeugseite übertragen wird. Es ist jedoch auch möglich, an beiden Fahrzeugseiten an beiden Längslenkern 2, 3 Lenkeinrichtungen 9 mit jeweils dem beschriebenen elektrischen oder hydraulischen Stellzylinder vorzusehen. Die Spurstange 7 kann dann entfallen.

### Bezugszeichenliste

- 1: Achskörper
- 2: Längslenker
- 3: Längslenker
- 4: Radträger
- 5: Lenkstange
- 6: Lenkstange
- 7: Spurstange
- 8: Lenkeinrichtung
- 9: Lenkeinrichtung
- 10: Lenkgetriebe
- 11: elektrischer oder hydraulischer Stellzylinder
- 12: hydraulische Kolben-/Zylindereinheit
- 13: Blattfeder
- 14: Längsträger
- 15: Einspannmittel
- 16: Lenkhebel am Lenkgetriebe
- 17: Lenkhebel am Radträger
- 18: Halteeinrichtung
- 19: Ausgleichslager
- 20: Anschlusskopf für Radträger
- 21: Befestigungsstellen für Längslenker
- 22: Kolbenstange
- 23: Lagerauge
- 24: Querabstützung
- 25: Kugelgelenk

## Patentansprüche

1. Lenkbare Fahrzeugachse für ein Nutzfahrzeug mit einem quer zur Fahrzeuglängsrichtung angeordneten Achskörper (1), welcher über beidseitig der Fahrzeuglängsmittelebene angeordnete Längslenker (2, 3) mit dem Fahrzeugaufbau verbunden ist, und einer Lenkeinrichtung (8; 9) zur Übertragung von Lenkkräften auf Radträger (4, 5), welche an beiden Enden des Achskörpers (1) um zugeordnete Lenkachsen (6) schwenkbar gelagert sind, **dadurch gekennzeichnet, dass** die Lenkeinrichtung (8; 9) an wenigstens einem Längslenker (2, 3) befestigt ist.

2. Lenkbare Fahrzeugachse nach Anspruch 1, **dadurch gekennzeichnet, dass** zumindest der Achskörper (1), die Längslenker (2, 3) und die Lenkeinrichtung (8; 9) eine vormontierbare Baueinheit bilden.

3. Lenkbare Fahrzeugachse nach Anspruch 1 oder 2, **dadurch gekennzeichnet, dass** die Lenkeinrichtung (8; 9) ein Lenkgetriebe (10) oder einen elektrischen oder hydraulischen Stellzylinder (11) aufweist, der an dem wenigstens einen Längslenker (2; 3) befestigt ist.

4. Lenkbare Fahrzeugachse nach einem der Ansprüche 1 bis 3, **dadurch gekennzeichnet, dass** das Lenkgetriebe (10) oder der Stellzylinder (11) im Bereich des fahrzeugaufbauseitigen Endes des Längslenkers (2, 3) befestigt ist.

5. Lenkbare Fahrzeugachse nach einem der Ansprüche 1 bis 4, **dadurch gekennzeichnet, dass** der Achskörper (1) über im wesentlichen parallel zu den Längslenkern (2, 3) angeordnete Blattfedern (12) oder der Achskörper mit Luftfedern (nicht gezeichnet) mit dem Fahrzeugaufbau, insbesondere einem Längsträger (13) des Fahrzeugaufbaus verbunden ist.

6. Lenkbare Fahrzeugachse nach Anspruch 5, **dadurch gekennzeichnet, dass** bei der Ausführung mit Luftfedern ein Panhardstab (nicht gezeichnet) die Querführung zwischen Achskörper und Fahrzeugaufbau übernimmt.

7. Lenkbare Fahrzeugachse nach 5, **dadurch gekennzeichnet, dass** Blattfedern (12) oder Luftfedern Bestandteile der vormontierbaren Baueinheit sind.

## Claims

1. Steerable vehicle axle for a commercial vehicle with an axle body (1) arranged in transverse position relative to the vehicle longitudinal axis and connected with the vehicle superstructure via longitudinal arms (2, 3) arranged on both sides of the vehicle longitudinal centre plane and with a steering device (8; 9) for transmitting steering forces on to the wheel carriers (4, 5) located at both ends of the axle body (1) and slewably mounted about associated steering axes (6), **characterised in that** the steering device (8; 9) is attached to at least one longitudinal arm (2, 3).

2. Steerable vehicle axle according to Claim 1, **characterised in that** at least the axle body (1), the longitudinal arms (2, 3) and the steering device (8; 9) constitute a preassembled constructional unit.

3. Steerable vehicle axle according to Claim 1 or 2, **characterised in that** the steering device (8; 9) has a steering gear (10) or an electric or hydraulic adjusting cylinder (11) connected to the at least one longitudinal arm (2; 3).

4. Steerable vehicle axle according to one of the Claims 1 to 3, **characterised in that** the steering gear (10) or the adjusting cylinder (11) is fitted in the area of that end of the longitudinal arm (2, 3) near the vehicle superstructure.

5. Steerable vehicle axle according to one of the Claims 1 to 4, **characterised in that** the axle body (1) or the axle body with air springs (not shown in the drawing) is connected with the vehicle superstructure, particularly with a longitudinal member (13) of the vehicle superstructure, via leaf springs (12) arranged essentially parallel to the longitudinal arms (2, 3).

6. Steerable vehicle axle according to Claim 5, **characterised in that** in the version with air springs a Panhard rod (not shown in the drawing) takes over the transverse location between axle body and vehicle superstructure.

7. Steerable vehicle axle according to Claim 5, charactensed in that leaf springs (12) or air springs are parts of the constructional unit for preassembly.

## Revendications

1. Essieu directeur de véhicule pour un véhicule industriel avec corps d'essieu (1) disposé transversalement par rapport au sens longitudinal du véhicule, ce corps d'essieu étant relié à la structure du véhicule par l'intermédiaire des bras longitudinaux (2, 3) disposés de chaque côté du plan central longitudinal du véhicule et avec un dispositif de direction (8, 9) pour transmettre les efforts d'actionnement de direction sur les supports de roue (4, 5) qui sont logés aux deux extrémités du corps d'essieu (1) et pivotables autour des pivots de direction (6) attribués, **caractérisé par le fait que** le dispositif de direction (8, 9) est fixé au minimum à un bras longitudinal (2, 3).

2. Essieu directeur de véhicule selon la revendication 1, **caractérisé par le fait qu'**au minimum le corps d'essieu (1), le bras longitudinal (2, 3) et le dispositif de direction (8, 9) forment une unité de construction prémontable.

3. Essieu directeur de véhicule selon la revendication 1 ou 2, **caractérisé par le fait que** le dispositif de direction (8, 9) présente un boîtier de direction (10) ou un vérin actionneur (11) électrique ou hydraulique qui est fixé à au minimum un bras longitudinal (2, 3).

4. Essieu directeur de véhicule selon une des revendications 1 à 3, **caractérisé par le fait que** le boîtier de direction (10) ou le vérin actionneur (11) est fixé au niveau de l'extrémité côté structure du bras longitudinal (2, 3).

5. Essieu directeur de véhicule selon une des revendications 1 à 4, **caractérisé par le fait que** le corps d'essieu (1) est relié à la structure du véhicule, en particulier à un longeron (13) de la structure du véhicule par l'intermédiaire de ressorts à lames (12) disposés, pour l'essentiel, parallèles aux bras longitudinaux (2, 3) ou par l'intermédiaire de coussins pneumatiques (non représentés).

6. Essieu directeur de véhicule selon la revendication 5, **caractérisé par le fait que**, sur la variante avec coussins pneumatiques, une barre Panhard (non représentée) prend en charge le guidage transversal entre le corps d'essieu et la structure du véhicule.

7. Essieu directeur de véhicule selon la revendication 5, **caractérisé par le fait que** les ressorts à lames (12) ou les coussins pneumatiques font partie intégrante de l'unité de construction prémontable.
